(19) Europäisches Patentamt European Patent Office Office européen des brevets

(11) **EP 2 716 449 B1**

(12) **EUROPEAN PATENT SPECIFICATION**

(45) Date of publication and mention of the grant of the patent:
**29.06.2016 Bulletin 2016/26**

(21) Application number: **12792350.6**

(22) Date of filing: **29.05.2012**

(51) Int Cl.:
*B32B 27/32* [(2006.01)]    *B32B 27/12* [(2006.01)]
*B32B 5/02* [(2006.01)]    *B32B 27/08* [(2006.01)]

(86) International application number:
**PCT/JP2012/063789**

(87) International publication number:
**WO 2012/165438 (06.12.2012 Gazette 2012/49)**

(54) **MULTILAYER ELASTIC FILM**

MEHRLAGIGE ELASTISCHE FOLIE

FILM ÉLASTIQUE MULTI-COUCHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2011   JP 2011124499**

(43) Date of publication of application:
**09.04.2014   Bulletin 2014/15**

(73) Proprietor: **Idemitsu Kosan Co., Ltd Tokyo 100-8321 (JP)**

(72) Inventors:
 • **HOMMA, Rikki**
   **Ichihara-shi**
   **Chiba 299-0193 (JP)**
 • **TAKEBE, Tomoaki**
   **Ichihara-shi**
   **Chiba 299-0193 (JP)**
 • **MINAMI, Yutaka**
   **Ichihara-shi**
   **Chiba 299-0193 (JP)**

(74) Representative: **Vossius & Partner Patentanwälte Rechtsanwälte mbB Siebertstrasse 3 81675 München (DE)**

(56) References cited:
**EP-A1- 1 231 236      EP-A1- 1 552 921
JP-A- 2000 044 695     JP-A- 2002 145 314
JP-A- 2002 268 555     JP-A- 2004 082 469
JP-A- 2008 012 833     US-A1- 2009 325 447**

 • **X. M. SHI: "Non-isothermal crystallization and melting of ethylene-vinyl acetate copolymers with different vinyl acetate contents", EXPRESS POLYMER LETTERS, vol. 2, no. 9, 29 August 2008 (2008-08-29) , pages 623-629, XP055155294, DOI: 10.3144/expresspolymlett.2008.75**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a multilayer elastic film, more specifically, to a multilayer elastic film used as an elastic member and the like for hygiene products including a disposable diaper and a sanitary napkin.

BACKGROUND ART

In recent years, an elastic film has been used in a variety of applications, including, such as for example, a disposable diaper, a sanitary napkin, a hygiene product, a clothing material, a bandage, and a packaging material. In particular, a disposable diaper, a sanitary napkin, and the like are used such that they are brought into direct contact with a body; and thus, in view of a comfortable use feeling to a body, mobility of a body after wearing it, and so forth, an appropriate retractility and elastic recovery are required.

Patent Document 1 discloses: a packaging film for sundry goods having at least one layer formed of a propylene polymer (I) having a meso pentad fraction (mmmm) of 20 to 60% by mol and satisfying (rrrr)/(1-(mmmm))<0.1; and a packaging film for sundry goods having at least one layer formed of a resin composition comprising the propylene polymer (I) and an olefin polymer (II).

Patent Document 2 discloses a polypropylene film formed of a propylene polymer not only having a certain tensile modulus and intrinsic viscosity, but also having a meso pentad fraction (mmmm) of 20 to 60% by mol while satisfying (rrrr)/(1-(mmmm))≦0.1.

Patent Document 3 discloses a specific laminated film for stretch wrapping comprising at least three layers.

Patent Document 1: Japanese Patent Laid-Open Publication No. 2002-138149
Patent Document 2: Japanese Patent Laid-Open Publication No. 2001-226498
Patent Document 3: Japanese Patent Laid-Open Publication No. 2004-082469

SUMMARY OF THE INVENTION

PROBLEMS TO BE SOLVED BY THE INVENTION

In Patent Document 1, a packaging film for sundry goods having the tensile modulus of 20 MPa or higher is disclosed; but retractility and elastic recovery thereof are low.

The propylene polymer to constitute the polypropylene film disclosed in Patent Document 2 has slow crystallization rate with the glass transition temperature being lower than room temperature; and thus, there are problems, such as for example, that the resin sticks to a molding machine upon molding it into a film, and that the films cannot be separated with each other because of blocking of the films by themselves during rolling up to a roll, thereby posing a difficulty in continuous molding thereof.

The problem to be solved by the present invention is to provide a multilayer elastic film having an excellent elastic recovery property while being capable of continuous molding.

MEANS FOR SOLVING THE PROBLEMS

Inventors of the present invention carried out an extensive investigation; and as a result, in a multilayer elastic film comprising a layer (A) formed of a certain polypropylene (A) and a layer (B) formed of a polyolefin resin or a polyolefin resin composition, it was found that both excellent elastic recovery and continuous moldability were compatible if crystallinity of the resin or the resin composition to constitute the layer (B) and thickness of the layer (B) were in a certain relationship. The present invention could be completed based on this finding.

That is, the present invention provides a multilayer elastic film which comprises a layer (A) formed of polypropylene (A) satisfying the following (a) to (d) and a layer (B) formed of a polyolefin resin or a polyolefin resin composition, and also satisfies the following formula (1):

(a) (mmmm) = 20 to 60% by mol,
(b) (rrrr)/(1-(mmmm))<0.1,
(c) (rmrm)>2.5% by mol, and
(d) $(mm) \times (rr)/(mr)^2 \leq 2.0$

$$Y \leq 600/X \qquad (1)$$

Y (%) = crystallinity of the resin or the resin composition to constitute the layer(s) (B), and
X (%) = total thickness of layer(s) (B)/total thickness of the multilayer elastic film $\times$ 100;
wherein the amount of the polypropylene (A) is 90% or more by mass relative to the total mass of the multilayer elastic film.

EFFECT OF THE INVENTION

The multilayer elastic film of the present invention has an excellent elastic recovery property; and in addition, this film does not stick to a molding machine even in continuous molding nor does cause blocking of the films by themselves during rolling up to a roll.

BRIEF DESCRIPTION OF THE DRAWING

Fig. 1
This is a plotting chart showing a relationship between the ratio of the layer (B) in the multilayer elastic film of Examples and Comparative Examples and crystallinity of the resin or the resin composition to constitute the layer (B).

MODES FOR CARRYING OUT THE INVENTION

The multilayer elastic film of the present invention comprises a layer (A) formed of a Polypropylene (A) satisfying the following (a) to (d) and a layer (B) formed of a polyolefin resin or a polyolefin resin composition, and also satisfies the following formula (1).

(a) (mmmn) = 20 to 60% by mol
(b) (rrrr)/(1-(mmmm))$\leq$0.1
(c) (rmrm)>2.5% by mol
(d) (mm)$\times$(rr)/(mr)$^2$$\leq$2.0

$$Y \leq 600/X \qquad (1)$$

Y (%) = crystallinity of the resin or the resin composition to constitute the layer(s) (B),
X (%) = total thickness of layer(s) (B)/total thickness of the multilayer elastic film $\times$ 100,

wherein the amount of the polypropylene (A) is 90% or more by mass relative to the total mass of the multilayer elastic film.

1. Layer (A)

The layer (A) in the multilayer elastic film of the present invention is formed of a polypropylene (A) which satisfies the following (a) to (d).

(a) (mmmm) = 20 to 60% by mol
(b) (rrrr)/(1-(mmmm))$\leq$0.1
(c) (rmrm)>2.5% by mol
(d) (mm)$\times$(rr)/(mr)$^2$$\leq$2.0

It is preferable that the polypropylene (A) satisfy further the following (e) and (f).

(e) Weight-average molecular weight (Mw) is in the range of 100,000 to 500,000 and molecular weight distribution (Mw/Mn) is less than 4
(f) Melt flow rate (MFR) is 100 g/10-minute or less

Polypropylene (A):

(a) Meso pentad fraction (mmmm)

The meso pentad fraction (mmmm) is the indicator to show a stereoregularity of a polypropylene, meaning that the stereoregularity is higher when the meso pentad fraction (mmmm) is larger.

The meso pentad fraction (mmmm) of the polypropylene (A) used in the present invention is in the range of 20 to 60% by mol, preferably in the range of 30 to 50% by mol, or more preferably in the range of 40 to 50% by mol. If the meso pentad fraction (mmmm) is 20% or more by mol, generation of stickiness is suppressed; and if 60% or less by mol, crystallinity is not too high, so that a good elastic recovery property can be obtained.

The meso pentad fraction (mmmm), the racemic pentad fraction (rrrr), and the racemic-meso-racemic-meso pentad fraction (rmrm) are determined according to the method proposed by A. Zambelli, et al., "Macromolecules, 6, 925 (1973)," which respectively correspond to the meso fraction, the racemic fraction, and the racemic-meso-racemic-meso fraction of pentad units in the polypropylene molecular chain as measured on the basis of the methyl signal of the $^{13}$C-NMR spectrum. The meso triad fraction (mm), the racemic triad fraction (rr), and the triad fraction (mr), which will be described later, are also calculated by the above-mentioned method.

Meanwhile, measurement of the $^{13}$C-NMR spectrum in this specification was made by the method described in EXAMPLES.

(b) (rrrr)/(1-(mmmm))

The value of (rrrr)/(1-(mmmm)) is obtained from the meso pendat fraction (mmmm) and the racemic pendat fraction (rrrr), and this is the indicator to show uniformity of the regularity distribution of the polypropylene. This means that, when the value of (rrrr)/(1-(mmmm)) is larger, the regularity distribution is wider, whereby causing stickiness.

In the polypropylene (A) used in the present invention, in order to suppress the stickiness, the value of (rrrr)/(1-(mmmm)) is 0.1 or less, preferably 0.05 or less, or more preferably 0.04 or less.

(c) Racemic-meso-racemic-meso fraction (rmrm)

The racemic-meso-racemic-meso fraction (rmrm) is the indicator to show randomness of the stereoregularity of the polypropylene, meaning that the polypropylene has higher randomness when this value is larger.

The racemic-meso-racemic-meso fraction (rmrm) of the polypropylene (A) used in the present invention is more than 2.5% by mol, preferably 2.6% or more by mol, or more preferably 2.7% or more by mol. The upper limit thereof is usually about 10% by mol. If the racemic-meso-racemic-meso fraction (rmrm) is 2.5% or more by mol, randomness of the stereoregularity of the polypropylene is increased thereby leading to further enhancement of the elastic recovery property.

(d) (mm)$\times$(rr)/(mr)$^2$

The value of (mm)$\times$(rr)/(mr)$^2$ calculated from the triad fractions (mm), (rr), and (mr) is the indicator to show randomness of the stereoregularity of the polypropylene, meaning that the polypropylene has higher randomness when this value is nearer to 0.25.

In the polypropylene (A) used in the present invention, the value of (mm)$\times$(rr)/(mr)$^2$ is 2.0 or less, preferably 1.8 or less, or more preferably 1.5 or less. If this value is more than 2.0, a satisfactory elastic recovery property cannot be obtained. When this value is nearer to 0.25, the stereoregularity of the polypropylene becomes higher; and thus, this is preferable because the elastic recovery property can be made better.

(e) Weight-average molecular weight (Mw) and molecular weight distribution (Mw/Mn)

In the polypropylene (A) used in the present invention, the weight-average molecular weight (Mw) thereof is preferably in the range of 100,000 to 500,000, more preferably in the range of 150,000 to 250,000, or still more preferably in the range of 180,000 to 220,000, in view of molding workability and in order to suppress generation of stickiness. The molecular weight distribution (Mw/Mn) is preferably less than 4, or preferably 3 or less, in order to suppress generation of stickiness.

Measurements of weight-average molecular weight (Mw) and molecular weight distribution (Mw/Mn) :

In the present invention, the weight-average molecular weight (Mw) is the polystyrene-equivalent weight-average molecular weight measured by a gel permeation chromatography method (GPC) by using the apparatus and the conditions shown later. The molecular weight distribution (Mw/Mn) is the value calculated from the number-average molecular weight (Mn) measured similarly and the weight-average-molecular weight (Mw). Note that, the GPC measurement in this specification was made by the method described in EXAMPLES.

(f) Melt flow rate (MFR)

MFR is the indicator to show flowability of a polymer, meaning that the flowability is higher when this value is larger. MFR in this specification is the value measured under the conditions with the temperature of 230°C and the load of 21.18 N in accordance with JIS K7210.

MFR of the polypropylene (A) used in the present invention is preferably 100 g/10-minutes or less, or more preferably in the range of 1.0 to 60 g/10-minutes, in view of molding workability and variance in lamination.

The above-mentioned (a) to (f) may be adjusted by appropriately determining the catalyst and the reaction conditions upon production of the polypropylene (A).

The polypropylene (A) used in the present invention can be synthesized by using a homogeneous catalyst, a so-called metallocene catalyst, such as those described in the International Publication No. WO2003/087172, the Japanese Patent Laid-Open Publication No. 2010-168713, and so fortli.

A commercially available polypropylene may also be used as the polypropylene (A) in the present invention; and thus, for example, L-MODU X901 S (trade name, manufactured by Idemitsu Kosan Co., Ltd.) may be used.

2. Layer (B)

The layer (B) in the multilayer elastic film of the present invention is formed of a polyolefin resin or a polyolefin resin composition.

Polyolefin resin or polyolefin resin composition:

In view of molding workability, preferable examples of the polyolefin resin is a polyolefin (B), which is polyethylene, polypropylene (except for the polypropylene (A)), a copolymer of ethylene with an olefin having 3 to 8 carbon atoms, a copolymer of propylene with an olefin having 4 to 8 carbon atoms, or a blend of them. Specific example of the copolymer of ethylene with an olefin having 3 to 8 carbon atoms is, for example, ethylene-octene copolymer.

As to the polyolefin (B), a commercially available polyolefin may be used; and thus, such as for example, ethylene-octene copolymer Engage 8407 (trade name, manufactured by DuPont Dow Elastomer LLC) may be used.

The polyolefin resin composition may contain the polypropylene (A). As to the polyolefin resin composition, in view of molding workability, a composition containing a resin component comprising 0 to 95% by mass of the polypropylene (A) and 5 to 100% by mass of the polyolefin (B) is preferable, provided that the sum of the polypropylene (A) and the polyolefin (B) is 100% by mass. The ratio of the polypropylene (A) to the polyolefin (B) in the resin component of the resin composition may be determined appropriately in view of molding workability, continuous moldability, the elastic recovery rate, and a relationship between crystallinity of the resin composition and thickness of the layer (B). In view of continuous moldability, content of the polyolefin (B) in the resin component of the resin composition is preferably 10% or more by mass, more preferably 20% or more by mass, or still more preferably 50% or more by mass, provided that the sum of the polypropylene (A) and the polyolefin (B) is 100% by mass.

The polyolefin resin composition may contain various kinds of additives as necessary. Illustrative example of the additives includes an antioxidant, a neutralization agent, a slipping agent, an anti-blocking agent, an anti-clouding agent, and an antistatic agent. These additives may be used one kind solely or as a combination of two or more kinds of them.

Among them, in view of handling properties during molding, it is preferable to use the anti-blocking agent. There is no particular restriction in the anti-blocking agent; and thus, various anti-blocking agents, such as for example, a silica type, a zeolite type, polymer beads, and the like, may be used; and for example, the anti-blocking agent of a synthetic silica type, Sylophobic (trade name, manufactured by Fuji Silysia Chemical Ltd.), may be used suitably.

Content of the anti-blocking agent in the resin composition is preferably in the range of 1000 to 10000 ppm by mass, or more preferably in the range of 1000 to 5000 ppm by mass, based on the resin composition.

MFR:

MFR of the polyolefin resin or the polyolefin resin composition to constitute the Layer (B) of the multilayer elastic film of the present invention is preferably 100 g/10-minutes or less, more preferably in the range of 1.0 to 60 g/10-minutes, still more preferably in the range of 2.0 to 40 g/10-minutes, or further still more preferably in the range of 3.0 to 30 g/10-minutes, in view of molding workability and variance in lamination with other layers. Note that, MFR is the value measured under the conditions with the temperature of 230°C and the load of 21.18 N in accordance with JIS K7210.

Crystallinity:

Crystallinity is the indicator to show hardness of the resin or the resin composition. Note that, measurement of crystallinity in this specification is made by the method described in EXAMPLES.

Crystallinity of the polyolefin resin or the polyolefin resin composition to constitute the layer (B) of the multilayer elastic film of the present invention is determined such that the relationship thereof with thickness of the layer (B) may satisfy the following formula (1), in view of molding workability, continuous moldability, and the elastic recovery rate.

$$Y \leq 600/X \qquad (1)$$

Y (%) = crystallinity of the resin or the resin composition to constitute the layer(s) (B).
X (%) = total thickness of layer(s) (B)/total thickness of the multilayer elastic film $\times$ 100

The formula (1) means that, if the resin or the resin composition having high crystallinity is used as the layer (B), because the layer (B) is hard, and low in retractility, in view of the elastic recovery rate of the film, thickness of the layer (B) needs to be thin; while if the resin or the resin composition having low crystallinity is used as the layer (B), because the layer (B) is soft, thickness of the Layer (B) may be thick.

Crystallinity of the resin or the resin composition to constitute the layer (B) can be determined appropriately, so that the crystallinity may be adjusted by mixing a resin having high crystallinity with a resin having low crystallinity such as the polypropylene (A). In the case that the layer (B) is formed of a plurality of different layers, requirement here is only to satisfy the formula (1) by the average crystallinity of entire of the layer (B).

In view of molding workability, it is preferable that crystallinity of the polyolefin resin or the polyolefin resin composition to constitute the layer (B) of the multilayer elastic film of the present invention be determined such that the relationship thereof with the thickness of the layer (B) may satisfy the following formula (2).

$$50/X \leq Y \leq 600/X \qquad (2)$$

3. Layer configuration of multilayer elastic film

The multilayer elastic film of the present invention has the layer (A) and the layer (B). Layer configuration in the multilayer elastic film of the present invention is not particularly restricted; and the number and the kind of the layer (A) and the layer (B) are not particularly restricted. For example, the two-layer configuration of layer (A)/layer (B), comprising one layer of the layer (A) and one layer of the layer (B), may be allowed; or the three-layer configuration of layer (B)/layer (A)/layer (B), comprising one layer of the layer (A) and two layers of the layer (B), may also be allowed. In addition, the multilayer elastic film of the present invention may contain also an arbitrary layer such as an adhesive layer as necessary. In view of molding workability, continuous moldability, and the elastic recovery rate, the three-layer configuration of layer (B)/layer (A)/layer (B) is preferable.

Thickness of the layer (A) in the multilayer elastic film of the present invention is not particularly restricted, while the thickness is to be determined by considering the material and the thickness of the layer (B), such that the amount thereof is 90% or more by mass, or preferably 95% or more by mass, relative to total mass of the multilayer elastic film, in view of the elastic recovery rate.

Thickness of the layer (B) in the multilayer elastic film of the present invention is determined such that the relationship thereof with crystallinity of the resin or the resin composition to constitute the layer (B) may satisfy the aforementioned formula (1), in view of molding workability, continuous moldability, and the elastic recovery rate. In the case that the multilayer elastic film of the present invention has the three-layer configuration of layer (B)/layer (A)/layer (B), thicknesses of layer (B)/thickness of layer (A)/thickness of layer (B) are preferably 1 to 25 $\mu$m/40 to 95 $\mu$m/1. to 25 $\mu$m, or more preferably 5 to 20 $\mu$m/60 to 90 $\mu$m/5 to 20 $\mu$m, respectively.

4. Method for producing multilayer elastic film

A method for producing the multilayer elastic film of the present invention is not particularly restricted; and thus, any arbitrary method including co-extruding by using a T-die method may be used. A T-die method is the method wherein a resin is melted in an extruder, and then, after the molten resin is extruded in the form of a film thorough a T-die slit, the film is pulled while being cooled by a roll, an air, and the like.

Meanwhile, in formation of a film, it is a general practice that a molten resin is cooled by a roll and so forth as in the case of the T-die method. However, in the case that a film formed of only the polypropylene (A) is produced, because of a slow crystallization rate and a lower glass-transition temperature than room temperature, the resin is stuck to the roll and so forth during cooling so that continuous molding becomes sometimes difficult. On the contrary, the multilayer elastic film of the present invention has the layer (B); and thus, continuous molding is possible without sticking.

Meanwhile, molding of a non-woven fabric is done as following: a molten resin is extruded through a nozzle, the extruded resin is cooled by an air, stretched, spun, and then, after the threads are piled, they are embossed. That is, because the cooled threads are piled on a collecting surface, they do not stick to the collecting surface.

In the case of co-extrusion by the T-die method, for example, a melt extruding machine of an extruder type having a monoaxial or a biaxial extruding screw may be used. In order to suppress discoloration, a biaxial kneader-extruder with L/D in the range of 15 or more and 120 or less is preferable. Temperature of the melt-extrusion is preferably in the range of 150 to 300°C, or more preferably in the range of 180 to 250°C. In the case of melt-kneading by using the kneader-extruder, in order to suppress discoloration, it is preferable that melt-kneading be done under reduced pressure by using a vent or under a stream of nitrogen gas. As to the transportation method of the molten thermoplastic resin, a discharge pressure of the extruder may be used as it is, or a gear pump which is installed after the extruder may be used, though use of the gear pump is preferable because variance in the film thickness due to variance in discharge can be reduced. It is preferable that the molten thermoplastic resin that is transported by the gear pump be filtrated in order to improve a film quality by removing foreign substances to cause some defects.

With regard to the filtration precision, it is preferable to remove foreign substances having the size of preferably 50 μm or larger, more preferably 10 μm or larger, or still more preferably 5 μm or larger. If the filtration precision is rough, defects due to foreign substances appear in the film so that it cannot be used as an optical film in a certain instance. The film quality is better with finer filtration precision; but, if the precision is too fine, film forming may become difficult due to increase in the filtration pressure. It is preferable to do the filtration in stages by using a plurality of filters having different filtration precisions in view of a prolonged life of the filter. The filtration may be done in the temperature range of 150°C or higher and 250°C or lower. Filter appropriately selected from, such as for example, a sintered metal, a porous ceramics, sands, and a metal net may be used.

The multilayer elastic film of the present invention is preferably a three-layer laminate film formed by co-extrusion. Illustrative example of the method for producing the laminate film like this includes a method wherein respective resins are measured by a gear pump followed by lamination by using a pinole or a feed block and a method wherein lamination is done within a mouthpiece like a multi-manifold. In view of lamination precision and maintenance of the machine, the method using the feed block is preferable. The feed block unit is installed preferably just before the mouthpiece in order to enhance the lamination precision.

Alternatively, the multilayer elastic film obtained by the co-extrusion may be further stretched monoaxially, biaxially, or the like to obtain the multilayer elastic film having both the layer (A) and the layer (B) co-stretched. As to the method for continuous stretching of the co-extruded film, the sequential biaxial stretching method or the simultaneous biaxial stretching method based on the tenter method, and the simultaneous biaxial stretching method based on the inflation method may be used. Furthermore, a biaxial stretching machine of a batch type may be used as well. The co-extrusion stretching magnification may be determined appropriately in accordance with the use of the multilayer elastic film, while the preferable magnification in the monoaxial stretch or in the biaxial stretch is in the range of 2 to 9 in a machine direction (MD) and/or a transverse direction (TD) to the machine direction.

The multilayer elastic film of the present invention has an excellent elastic recovery property; and thus, the elastic recovery rate is preferably 60% or higher, or more preferably 70% or higher. Meanwhile, measurement of the elastic recovery rate in this specification is made by the method described in EXAMPLES.

The multilayer elastic film of the present invention may be applied in various uses. There is no particular restriction as to the use of the elastic laminate product obtained by laminating the multilayer elastic film of the present invention to a non-woven fabric, while illustrative example of the use thereof includes a disposable diaper member, an elastic member for a diaper cover, an elastic member for hygiene products such as the member of a sanitary napkin, an elastic tape, an adhesive plaster, an elastic member for clothing material, a headwear, a glove, a supporter, a base cloth for a plaster, a base cloth for an anti-slipping material, a vibration dampener, a finger stall, an air filter for a clean room, a separator, a food packaging material, a cushioning material, a backing material, and a member for a bag.


EXAMPLES


Hereinafter, the present invention will be explained more specifically by using Examples; however, the present invention is not restricted by these Examples at all.

Raw materials used in Examples and Comparative Examples are as following.

- Polypropylene (B1): F300SP (trade name, manufactured by Prime Polymer Co., Ltd.)
- Polypropylene (B2): F704NP (trade name, manufactured by Prime Polymer Co., Ltd.)
- Polypropylene (B3): F744NP (trade name, manufactured by Prime Polymer Co., Ltd.)
- AB agent: anti-blocking agent of a synthetic silica type, Sylophobic (trade name, manufactured by Fuji Silysia Chemical Ltd.)
- Ethylene-octene copolymer: Engage 8407 (trade name, manufactured by DuPont Dow

Elastomer LLC)

Measurement of $^{13}$C-NMR. spectrum:

Measurement of the $^{13}$C-NMR spectrum was made by the apparatus and the conditions shown below in accordance with the peak assignments proposed byA. Zambelli, et al., in "Macromolecules, 8, 687 (1975)".
Apparatus: $^{13}$C-NMR spectrometer (model: JNM-EX400, manufactured by JEOL Ltd.)
Method: proton complete decoupling
Concentration: 220 mg/mL
Solvent: solvent mixture of 1,2,4-trichlorobenzene and hexadeuterobenzene (ratio by volume = 90 : 10)
Temperature: 130°C
Pulse width: 45°
Pulse repetition period: 4 seconds
Integration: 10,000 times

Calculation formulae:

$$M = m/S \times 100$$

$$R = \gamma/S \times 100$$

$$S = P\beta\beta + P\alpha\beta + P\alpha\gamma$$

S: signal intensity of a side chain methyl carbon atom in the whole propylene units
$P\beta\beta$: 19.8 to 22.5 ppm
$P\alpha\beta$: 18.0 to 17.5 ppm
$P\alpha\gamma$: 17.5 to 17.1 ppm
$\gamma$: racemic pentad chain: 20.7 to 20.3 ppm
m: meso pentad chain: 21.7 to 22.5 ppm

GPC measurement:

By using the apparatus and the conditions shown below, the weight-average molecular weight (Mw) and the number-average molecular weight (Mn) were measured as the polystyrene-equivalent values.

GPC measuring apparatus:

Column: TOSO GMHHR-H(S)HT (trade name; manufactured by Tosoh Corp.)
Detector: RI detector for liquid chromatography, WATERS 150C (trade name; manufactured by Waters Corp.)

Measurement conditions:

Solvent: 1,2,4-tri chlorobenzene
Measurement temperature: 145°C
Flow rate: 1.0 mL/minute
Sample concentration: 2.2 mg/mL
Amount of injection: 160 μL
Calibration curve: Universal Calibration
Analysis program: HT-GPC (Ver. 1.0)

Measurement of melt flow rate (MFR):

Melt flow rate was measured under the conditions with the temperature of 230°C and the load of 21.18 N in accordance with JIS K7210.

Measurement of melting heat capacity:

By using the differential scanning calorimeter DSC-7 (trade name, manufactured by PerkinElmer Inc.), 10 mg of a sample was kept under a nitrogen atmosphere at 220°C for 5 minutes; and then, the temperature was descended to -40°C at the descending rate of 10°C/minute. After keeping at -40°C for 5 minutes, the temperature was ascended to 220°C at the ascending rate of 10°C/minute; and from the area of the melting endothermic curve thereby obtained, the melting heat capacity ΔH was obtained. Crystallinity (%) was calculated from the following formula.

$$\text{Crystallinity (\%)} = \Delta H / \Delta H_m^0 \times 100$$

In the formula, $\Delta H_m^0$ shows the melting heat capacity of the perfect crystal, and the value for polypropylene is 209 J/g.

Production Example 1

Production of polypropylene (A):

Into a stainless steel reactor (inner volume of 20 liters) equipped with an agitator were continuously charged n-heptane at the rate or 20 L/hour, triisobutyl aluminum at the rate of 15 mmol/hour, and a catalyst component at the rate of 6 μmol/hour as zirconium, which component was prepared in advance by bringing dimethylanilinium tetrakispentafluorophenyl borate, (1,2'-dimethylsilylene)(2,1'-dimethylsilylene)-bis(3-trimethylsilylmethylindenyl)zirconium dichloride, triisobutyl aluminum, and propylene into contact with the mass ratio of 1:2:20.

The polymerization temperature was set at 67°C, and propylene and hydrogen were continuously charged to the reactor such that the hydrogen concentration in the gas phase of the reactor was kept at 0.8% by mol, and the total pressure in the reactor was kept at 0.7 MPaG, to carry out the polymerization reaction.

Irganox 1010 (trade name, manufactured by BASF SE), serving as a stabilizer, was added to the resultant polymerization solution so that the stabilizer content became 500 ppm by mass; and then, n-heptane (solvent) was removed to obtain the polypropylene (A).

With regard to the obtained polypropylene (A), the meso pendat fraction (mmmm), the value of (rrrr)/(1-(mmmm)), the racemic-meso-racemic-meso fraction (rmrm), the value of $(mm) \times (rr)/(mr)^2$, the weight-average molecular weight (Mw), the molecular weight distribution (Mw/Mn), MFR, and the melting heat capacity ΔH were measured by the methods described above. The results are shown in Table 1.

[Table 1]

| Resin properties of polypropylene (A) | |
|---|---|
| (mmmm) (% by mol) | 46.5 |
| (rrrr)/(1-(mmmm)) | 0.036 |
| (rmrm) (% by mol) | 3 |

(continued)

| Resin properties of polypropylene (A) | |
|---|---|
| $(mm) \times (rr)/(mr)^2$ | 1.4 |
| Mw | 120000 |
| Mw/Mn | 2 |
| MFR (g/10-minutes) | 60 |
| $\Delta H$ (J/g) | 1.2 |

Example 1

Preparation of three-layer film formed of two kinds:

The polypropylene (A) was used as the resin to constitute the layer (A); and a resin composition comprising 50% by mass of the polypropylene (A) and 50% by mass of the polypropylene (B1) was used as the resin composition to constitute the layer (B).

The resin to constitute the layer (A) and the resin composition to constitute the layer (B) were extruded by using two monoaxial extruders for each resin (65 mm$\phi$ and setting temperature of 190°C) to laminate through a feed block thereby giving the laminate layer formed of (B) layer/(A) layer/(B) layer; and then, it was extruded through a T-die (setting temperature of 200°C) to form a film. This film was cooled in such a way that one side thereof was completely attached to a cooling roll (20°C) to obtain an unstretched multilayer elastic film. On this occasion, the lip distance of the T-die was 0.8 mm. The lamination ratio of the film was made 0.5/9/0.5 as the thickness ratio of (B) layer/(A) layer/(B) layer by adjusting the discharge rate. From the observation result of the film's cross-section, each layer had the thickness of 5 $\mu$m/90 $\mu$m/5 $\mu$m.

Example 2

The same procedure as Example 1 was repeated, except that the resin composition to constitute the layer (B) was changed to the resin composition comprising 80% by mass of the polypropylene (A) and 20% by mass of the polypropylene (B1), thickness of the layer (B) was changed to 22 $\mu$m, and thickness of the layer (A) was changed to 58 $\mu$m, thereby forming the multilayer elastic film.

Example 3

The same procedure as Example 2 was repeated, except that thickness of the layer (B) was changed to 5 $\mu$m, and thickness of the layer (A) was changed to 68 $\mu$m, thereby forming the multilayer elastic film.

Example 4

The same procedure as Example 1 was repeated, except that the resin composition to constitute the layer (B) was changed to the resin composition comprising 90% by mass of the polypropylene (A), 9.5% by mass of the polypropylene (B1), and 0.5% by mass of the AB agent, thereby forming the multilayer elastic film.

Example 5

The same procedure as Example 1 was repeated, except that the resin to constitute the layer (B) was changed to the polypropylene (B2), thereby forming the multilayer elastic film.

Example 6

The same procedure as Example 1 was repeated, except that the resin to constitute the layer (B) was changed to the ethylene-octene copolymer, thickness of the layer (B) was changed to 2.8 $\mu$m, and thickness of the layer (A) was changed to 44 $\mu$m, thereby forming the multilayer elastic film.

Example 7

A test piece (JIS K-7113-2 1/2) was sampled from the multilayer elastic film obtained in Example 2 in a machine direction (MD). By using the tensile tester Autograph AG-I (trade name, manufactured by Shimadzu Corporation), the test piece was stretched in a MD direction by a factor of two at the strain rate of 100 mm/minute; and then, the load was removed. This was allowed to stand at room temperature for 24 hours to obtain the stretched multilayer elastic film. From the observation result of the film's cross-section, each layer had the thickness of 17.6 $\mu$m/46.4 $\mu$m/17.6 $\mu$m.

Example 8

The same procedure as Example 2 was repeated, except that thickness of the layer (B) was changed to 18 $\mu$m, and thickness of the layer (A) was changed to 67 $\mu$m, thereby forming the multilayer elastic film.

Example 9

The same procedure as Example 2 was repeated, except that thickness of the layer (B) was changed to 8 $\mu$m, and thickness of the layer (A) was changed to 72 $\mu$m, thereby forming the multilayer elastic film.

Comparative Example 1

The same procedure as Example 2 was repeated, except that thickness of the layer (B) was changed to 30 $\mu$m, and thickness of the layer (A) was changed to 40 $\mu$m, thereby forming the multilayer elastic films.

Comparative Example 2

The same procedure as Example 1 was repeated, except that thickness of the layer (B) was changed to 20 $\mu$m, and thickness of the layer (A) was changed to 60 $\mu$m, thereby forming the multilayer elastic film.

Comparative Example 3

The same procedure as Example 5 was repeated, except that thickness of the layer (B) was changed to 15 $\mu$m, and thickness of the layer (A) was changed to 70 $\mu$m, thereby forming the multilayer elastic film.

Comparative Example 4

The polypropylene (A) was used as the resin to constitute the layer (A); and the polypropylene (B2) and the polypropylene (B3) were used as the resin composition to constitute the layer (B).
The resin to constitute the layer (A) and the two resins to constitute the layer (B) were extruded by using three monoaxial extruders for each resin (65 mm$\phi$ and setting temperature of 190°C) to laminate through a feed block thereby giving the laminate layer having the configuration of (B) layer/(A) layer/(B) layer; and then, it was extruded through a T-die (setting temperature of 200°C) to form a film. This film was cooled in such a way that one side thereof was completely attached to a cooling roll (20°C) to obtain an unstretched multilayer elastic film. On this occasion, the lip distance of the T-die was 0.8 mm. The lamination ratio of the film was made 1/8/1 as the thickness ratio of (B) layer/(A) layer/(B) layer by adjusting the discharge rate. From the observation result of the film's cross-section, each layer had the thickness of 10 $\mu$m/80 $\mu$m/10 $\mu$m.

Evaluation of elastic recovery rate by tensile tester:

Test pieces (JIS K-7113-2 1/2) were sampled from the multilayer elastic films obtained in Examples 1 to 9 and Comparative Examples 1 to 4 in a machine direction (MD) and in a transverse direction (TD) perpendicular to the machine direction, respectively. By using the tensile tester Autograph AG-I (trade name, manufactured by Shimadzu Corporation), the test piece with the initial length $L_0$ (40 mm) was stretched and retracted from the strain of 0% to 100% for three times at the strain rate of 100 mm/minute. The length L (mm) at the time when the stress was generated upon the third stretching was measured. The elastic recovery rate (%) was calculated according to the following formula.

$$\text{Elastic recovery rate (\%)} = (100 - L)/L_0 \times 100$$

The measurement results of the elastic recovery rates are shown in Table 2.

[Table 2]

| | Resin to constitute layer (A) | Resin or resin composition to constitute layer (B) | | Thickness of the layers μm) (B) layer/(A) layer/(B) layer | X (%) | 600/X (%) | Y (%) | Elastic recovery rate (%) | |
|---|---|---|---|---|---|---|---|---|---|
| | | Composition | MFR (g/10-min) | | | | | MD | TD |
| Example 1 | Polypropylene (A) | Polypropylene (A) 50% by mass Polypropylene (B1) 50% by mass | 13 | 5/90/5 | 10.0 | 60.0 | 24.3 | 71 | 67 |
| Example 2 | Polypropylene (A) | Polypropylene (A) 80% by mass Polypropylene (B1) 201o by mass | 33 | 22/58/22 | 43.1 | 13.9 | 11.4 | 70 | 66 |
| Example 3 | Polypropylene (A) | Polypropylene (A) 80% by mass Polypropylene (B1) 20% by mass | 33 | 5/68/5 | 12.8 | 46.8 | 11.4 | 77 | 67 |
| Example 4 | Polypropylene (A) | Polypropylene (A) 90% by mass Polypropylene (B1) 9.5% by mass AB agent 0.5% by mass | 45 | 5/90/5 | 10.0 | 60.0 | 7.1 | 78 | 74 |
| Example 5 | Polypropylene (A) | Polypropylene (B2) | 7 | 5/90/5 | 10.0 | 60.0 | 50.2 | 76 | 76 |
| Example 6 | Polypropylene (A) | Ethylene-octene copolymer | 61 | 2.8/44/2.8 | 11.3 | 53.1 | 2.8 | 84 | 63 |
| Example 7 | Polypropylene (A) | Polypropylene (A) 80°% by mass Polypropylene (B1) 20% by mass | 33 | 17.6/46.4/17.6 | 11.3 | 53.1 | 11.4 | 90 | 88 |
| Example 8 | Polypropylene (A) | Polypropylene (A) 80% by mass Polypropylene (B1) 20% by mass | 33 | 18/67/18 | 35.0 | 17.2 | 11.4 | 67 | 67 |
| Example 9 | Polypropylene (A) | Polypropylene (A) 80% by mass, Polypropylene (B1) 2.0% by mass | 33 | 8/72/8 | 18.2 | 33.0 | 11.4 | 71 | 67 |
| Comparative Example 1 | Polypropylene (A) | Polypropylene (A) 80% by mass Polypropylene (B1) 20% by mass | 33 | 30/40/30 | 60.0 | 10.0 | 11.4 | 53 | 50 |

EP 2 716 449 B1

12

EP 2 716 449 B1

(continued)

| | Resin to constitute layer (A) | Resin or resin composition to constitute layer (B) | | Thickness of the layers μm) (B) layer/(A) layer/(B) layer | X (%) | 600/X (%) | Y (%) | Elastic recovery rate (%) | |
|---|---|---|---|---|---|---|---|---|---|
| | | Composition | MFR (g/10-min) | | | | | MD | TD |
| Comparative Example 2 | Polypropylene (A) | Polypropylene (A) 50% by mass Polypropylene (B1) 50% by mass | 13 | 20/60/20 | 40.0 | 15.0 | 24.3 | 44 | 42 |
| Comparative Example 3 | Polypropylene (A) | Polypropylene (B2) | 7 | 15/70/15 | 30.0 | 20.0 | 50.3 | 42 | 41 |
| Comparative Examples 4 | Polypropylene (A) | Polypropylene (B2) and Polypropylene (B3) | 7 | 10/80/10 | 20.0 | 30.0 | 42.0 | 57 | 57 |

X = total thickness of the layer (B)/total thickness of the multilayer elastic films x 100
Y = crystallinity of the resin or the resin composition to constitute the layer (B)
The film of Example 7 was obtained by stretching the film obtained in Example 2 by a factor of 2 in the MD direction at room temperature.
The film of Comparative Example 4 has the three-layer configuration of (B2)/(A)/(B3) formed of three kinds of resins.

As it is apparent from Table 2, the elastic recovery rates in both MD and TD of Examples 1 to 9 are 63% or higher, while the elastic recovery rates in MD and TD in Comparative Examples 1 to 4 are 57% at a maximum. Requirement for the elastic recovery rate of elastic members used in a diaper and the like is 60% or higher, so that the difference in the elastic recovery rates between Examples and Comparative Examples is practically significant.

Especially, when comparison is made between Example 2 and Comparative Example 1, the resin to constitute the layer (A) and the resin composition to constitute the layer (B) are respectively the same therebetween, and in addition, crystallinity of the resin composition to constitute the layer (B) is 11.4% in both cases, while thicknesses of the respective layers are different therebetween. In Example 2 in which thickness (X) of the layer (B) relative to the total film thickness is 43.1%, the elastic recovery rates are MD=70% and TD=66%; on the other hand, in Comparative Example 1 in which thickness (X) of the layer (B) relative to the total film thickness is 60.0%, the elastic recovery rates are low (MD=53% and TD=50%).

When comparison is made between Example 2 and Comparative Example 2, the resin to constitute the layer (A) and thickness of the respective layers are the same therebetween, while composition and crystallinity of the resin composition to constitute the layer (B) are different therebetween. In Example 2 in which crystallinity (Y) of the resin composition to constitute the layer (B) is 11.4%, the elastic recovery rates are MD=70% and TD=66%; on the other hand, in Comparative Example 2 in which crystallinity (Y) of the resin composition to constitute the layer (B) is 24.3%, the elastic recovery rates are low (MD=44% and TD=42%).

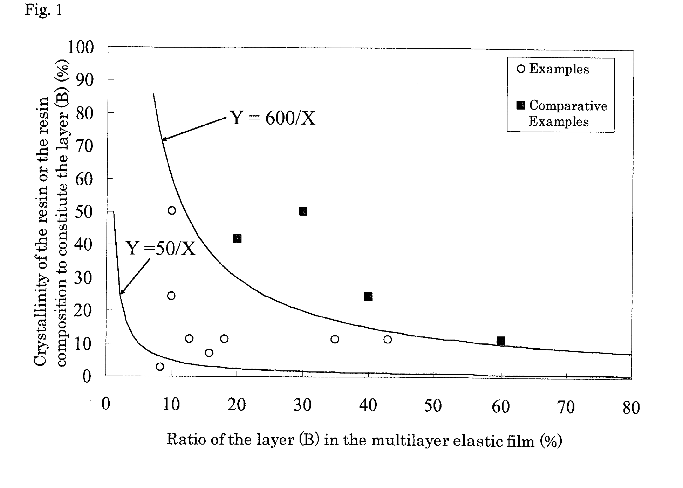

FIG. 1 shows a plotting chart showing, based on the results in Table 2, a relationship between the ratio of the layer (B) in the multilayer elastic film of Examples and Comparative Examples and crystallinity of the resin or the resin composition to constitute the layer (B).

From Table 2 and FIG. 1, it can be seen that the multilayer elastic film having the desired elastic recovery rate cannot be obtained if the relationship between thickness of the layer (B) and crystallinity of the resin or the resin composition to constitute the layer (B) does not satisfy the before-mentioned formula (1), even if polypropylene (A) having a good retractility is used as the layer (A).

The film formed of only the polypropylene (A) has a slow crystallization rate with the glass transition temperature being lower than room temperature; and thus, there are problems, such as for example, that the resin sticks to a molding machine upon molding it into a film, and that the films cannot be separated with each other because of blocking of the films themselves during rolling up to a roll. However, the multilayer elastic films of Examples did not have such problems so that it could be molded continuously.

INDUSTRIAL APPLICABILITY

The multilayer elastic film of the present invention has an excellent elastic recovery property so that it can be suitably used in the field of elastic members of hygiene products such as for example, a disposable diaper and a sanitary napkin.

**Claims**

1. A multilayer elastic film, wherein the said film comprises a layer (A) formed of polypropylene (A) satisfying the following (a) to (d) and a layer (B) formed of a polyolefin resin or a polyolefin resin composition, and also satisfies the following formula (1):

   (a) (mmmm)= 20 to 60% by mol,
   (b) (rrrr)/(1-(mmmm))≤0.1,
   (c) (rmrm)>2.5% by mol, and
   (d) $(mm)\times(rr)/(mr)^2\leq2.0$; and

$$Y\leq600/X \qquad (1)$$

   Y (%) = crystallinity of the resin or the resin composition to constitute the layer(s) (B), and
   X (%) = total thickness of layer(s) (B)/total thickness of the multilayer elastic film $\times$ 100

   wherein the amount of the polypropylene (A) is 90% or more by mass relative to the total mass of the multilayer elastic film.

2. The multilayer elastic film according to claim 1, wherein the polyolefin resin is a polyolefin (B), and the polyolefin resin composition is a resin composition having a resin component comprising 0 to 95% by mass of the polypropylene (A) and 5 to 100% by mass of a polyolefin (B); and the said polyolefin (B) is polyethylene, polypropylene (except for the polypropylene (A)), a copolymer of ethylene with an olefin having 3 to 8 carbon atoms, a copolymer of propylene with an olefin having 4 to 8 carbon atoms, or a blend of them.

3. The multilayer elastic film according to claim 1 or 2, wherein the polyolefin resin composition to constitute the layer (B) contains an anti-blocking agent in the range of 1000 to 10000 ppm by mass based on the resin composition.

4. The multilayer elastic film according to any of claims 1 to 3, wherein the said multilayer elastic film is a stretched multilayer elastic film obtained by stretching the multilayer elastic film monoaxially or biaxially.

5. An elastic laminate product obtained by laminating the multilayer elastic film according to any of claims 1 to 4 to a non-woven fabric.

## Patentansprüche

1. Eine mehrlagige elastische Folie, wobei die Folie eine Schicht (A), gebildet aus Polypropylen (A) erfüllend die folgenden (a) bis (d), und eine Schicht (B), gebildet aus einem Polyolefinharz oder einer Polyolefinharz-Zusammensetzung, umfasst, und auch die folgende Formel (1) erfüllt:

(a) (mmmm) = 20 bis 60 Mol-%,
(b) (rrrr)/(1-(mmmm))≤0,1,
(c) (rmrm)>2,5 Mol-% und
(d) (mm)×(rr)/(mr)≤2,0; und

$$Y \leq 600/X \qquad (1)$$

Y (%) = Kristallinität des Harzes oder der Harzzusammensetzung, um die Schicht(en) (B) zu bilden, und
X (%) = Gesamtdicke der Schicht(en) (B)/Gesamtdicke der mehrlagigen elastischen Folie x 100,

wobei die Menge an Polypropylen (A) 90 Massen-% oder mehr, bezogen auf die Gesamtmasse der mehrlagigen elastischen Folie, beträgt.

2. Die mehrlagige elastische Folie gemäß Anspruch 1, wobei das Polyolefinharz ein Polyolefin (B) ist und die Polyolefinharz-Zusammensetzung eine Harzzusammensetzung mit einer Harzkomponente, umfassend 0 bis 95 Massen-% des Polypropylens (A) und 5 bis 100 Massen-% eines Polyolefins (B), ist; und das Polyolefin (B) Polyethylen, Polypropylen (mit Ausnahme des Polypropylens (A)), ein Copolymer von Ethylen mit einem Olefin, welches 3 bis 8 Kohlenstoffatome aufweist, ein Copolymer von Propylen mit einem Olefin, welches 4 bis 8 Kohlenstoffatome aufweist, oder eine Mischung davon ist.

3. Die mehrlagige elastische Folie gemäß Anspruch 1 oder 2, wobei die Polyolefinharz-Zusammensetzung, welche die Schicht (B) bildet, ein Antihaftmittel im Bereich von 1000 bis 10000 Massen-ppm, bezogen auf die Harzzusammensetzung, enthält.

4. Die mehrlagige elastische Folie gemäß einem der Ansprüche 1 bis 3, wobei die mehrlagige elastische Folie eine gestreckte mehrlagige elastische Folie ist, welche durch monoaxiales oder biaxiales Strecken der mehrlagigen elastischen Folie erhalten wird.

5. Ein elastisches Laminatprodukt, erhalten durch Laminieren der mehrlagigen elastischen Folie gemäß einem der Ansprüche 1 bis 4 in einen Vliesstoff.

## Revendications

1. Film élastique multicouche, dans lequel ledit film comprend une couche (A) constituée d'un polypropylène (A) satisfaisant aux conditions (a) à (d) suivantes et une couche (B) constituée d'une résine de polyoléfine ou d'une composition de résine de polyoléfine, et satisfait également la formule (1) suivante :

(a) (mmmm) = 20 à 60 % en mol,
(b) (rrrr)/(1-(mmmm))≤0,1,
(c) (rmrm) > 2,5 % en mol, et
(d) (mm)×(rr)/(mr)$^2$≤2,0 ; et

$$Y \leq 600/X \qquad (1)$$

Y (%) = cristallinité de la résine ou de la composition de résine destinée à constituer la ou les couches (B), et
X (%) = épaisseur totale de la ou des couches (B)/épaisseur totale du film élastique multicouche × 100

dans lequel la quantité de polypropylène (A) est de 90 % ou plus en poids, par rapport au poids total du film élastique multicouche.

2. Film élastique multicouche selon la revendication 1, dans lequel la résine de polyoléfine est une polyoléfine (B), et la composition de résine de polyoléfine est une composition de résine ayant un composant de résine comprenant de 0 à 95 % en poids de polypropylène (A) et de 5 à 100 % en poids de polyoléfine (B) ; et ladite polyoléfine (B) est un polyéthylène, un polypropylène (exception faite du polypropylène (A)), un copolymère d'éthylène avec une oléfine ayant de 3 à 8 atomes de carbone, un copolymère de propylène avec une oléfine ayant de 4 à 8 atomes de carbone, ou un mélange de ceux-ci.

3. Film élastique multicouche selon la revendication 1 ou 2, dans lequel la composition de résine de polyoléfine destinée à constituer la couche (B) contient un agent anti-bloquant dans la plage de 1000 à 10 000 ppm en poids, sur la base de la composition de résine.

4. Film élastique multicouche selon l'une quelconque des revendications 1 à 3, dans lequel ledit film élastique multicouche est un film élastique multicouche étiré obtenu par étirage du film élastique multicouche dans un sens monoaxial ou biaxial.

5. Produit de type stratifié élastique obtenu par stratification du film élastique multicouche selon l'une quelconque des revendications 1 à 4 sur une étoffe non tissée.

Fig. 1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002138149 A
- JP 2001226498 A
- JP 2004082469 A

- WO 2003087172 A
- JP 2010168713 A

**Non-patent literature cited in the description**

- **A. ZAMBELLI et al.** *Macromolecules,* 1973, vol. 6, 925

- **A. ZAMBELLI et al.** *Macromolecules,* 1975, vol. 8, 687